# EUROPÄISCHE PATENTANMELDUNG

(11) **EP 4 554 017 A1**
(43) Veröffentlichungstag der Anmeldung: **14.05.2025**
(21) Anmeldenummer: 24197188.6
(22) Anmeldetag: 29.08.2024
(51) Int. Cl.: H01R 25/14, H01R 41/00, B60L 5/36, B60L 5/40, B60M 1/34, H02G 5/00

(54) **VERBINDUNGSELEMENT, SCHLEIFLEITUNG, STROMABNEHMERWAGEN UND SCHLEIFLEITUNGSSYSTEM**

(30) Priorität: 13.11.2023 DE 102023131552
(71) Anmelder: Conductix-Wampfler GmbH, 79576 Weil am Rhein (DE)
(72) Erfinder: Früh, Manuel, 79588 Efringen-Kirchen (DE)
(74) Vertreter: Charrier Rapp & Liebau

(57) **Zusammenfassung**

Die Erfindung betrifft ein Verbindungselement (60) zur elektrischen und mechanischen Verbindung von in eine Längsrichtung (L) einer Schleifleitung (2) benachbarten Teilabschnitten (2a, 2b) der Schleifleitung (2), wobei die Teilabschnitte (2a, 2b) der Schleifleitung (2) sich in Längsrichtung (L) erstreckende, einen Innenraum (I) umgebende Rahmenprofile (3, 103) mit einer Innenkontur aufweist, wobei der Innenraum (I) über in Längsrichtung (L) verlaufende Längsschlitze (5, 105) in den Rahmenprofilen (3) von außen zugänglich ist, in dem Innenraum (I) sind mehrere Stromschienen (13a-e, 113a-e) zur schleifenden Kontaktierung mit jeweils einem entsprechenden Schleifkontakt (53a-f) eines längs der Schleifleitung (2) verfahrbaren Stromabnehmerwagens (40) vorgesehen, wobei der Stromabnehmerwagen (40) zum Verfahren in Längsrichtung (L) entlang der Schleifleitung (2) drehbar gelagerte Laufrollen (42, 43) aufweist, die mit ihren Laufflächen (48a, 48b, 49a, 49b) auf entsprechenden Gleisflächen (9a, 9b, 109a, 109b) der Rahmenprofile (3, 103) der Schleifleitung (2) rollen. Die Erfindung löst die Aufgabe, einen geringem Verschleiß der Schleifleitungskontakte zu ermöglichen, dadurch, dass das Verbindungselement (60) ein an die Innenkontur der Rahmenprofile (3, 103) angepasstes Verbindungsprofil (63, 63') aufweist, an welches sich in Längsrichtung (L) beidseits zu den Teilabschnitten (2a, 2b) hin weisende, zum Umgreifen der Rahmenprofile (3, 103) an die Außenkonturen der Rahmenprofile (3, 103) angepasste Verbindungskonturen (62, 62') erstrecken.

## Beschreibung

Die Erfindung betrifft ein Verbindungselement nach dem Oberbegriff des Anspruchs 1, eine Schleifleitung, insbesondere Kastenschleifleitung nach dem Oberbegriff des Anspruchs 17, einen Stromabnehmerwagen nach dem Oberbegriff des Anspruchs 20 sowie ein Schleifleitungssystem nach dem Oberbegriff des Anspruchs 22.

Die DE 296 02 589 U1 betrifft eine Kastenschleifleitung, bei der in einem im Querschnitt weitgehend rechteckförmigen Kunststoffprofil an senkrechten Seitenwandungen des Kunststoffprofils jeweils übereinander zwei Schienenhalter für elektrisch leitende Stromschienen und an der die Seitenwandung oben verbindenden oberen Wand eine einzelne Stromschiene in Längsrichtung der Kastenschleifleitung verlaufen. Am unteren Ende der Seitenwandungen hingegen ist lediglich ein Kunststoffprofil mit einem in Längsrichtung verlaufenden Längsschlitz vorgesehen. Die an den Stromschienen entlangschleifenden Schleifkontakte sind an einem in der Kastenschleifleitung in Längsrichtung verfahrbaren Stromabnehmerwagen befestigt, welcher mit Rollen auf sich quer zur Längsrichtung an den Längsschlitz anschließenden Laufflächen des Kastenprofils verfährt.

Die DE 10 2009 034 792 A1 betrifft eine Anordnung zum Verbinden von zwei aufeinanderfolgenden Schleifleitungsschienen, die jeweils aus einem Kunststofflängsprofil und aus mindestens einer daran entlang verlaufenden Stromschiene bestehen, mit einem die gegenüberliegenden Stromschienenenden der Stromschienen von zwei aufeinanderfolgenden Schleifleitungsschienen verbindenden Stromschienenverbinder und mit an den gegenüberliegenden Schienenenden der Schleifleitungsschienen von zwei aufeinanderfolgenden Schleifleitungsschienen befestigten Zusatzelementen, die die Stromschienenverbinder überdecken. Um eine Anordnung zum Verbinden von zwei aufeinanderfolgenden Schleifleitungsschienen zu schaffen, die einfach herzustellen ist sowie eine unkomplizierte Montage ermöglicht, wird vorgeschlagen, dass an jedem der gegenüberliegenden Schienenenden der zu verbindenden Schleifleitungsschienen ein Zwischenelement befestigt ist und an den Zwischenelementen die Zusatzelemente befestigt sind.

Die DE 10 2016 108 442 A1 betrifft eine Datenübertragungsvorrichtung mit einem länglichen Hohlprofil mit einem in eine Längsrichtung des Hohlprofils verlaufenden Hohlraum, wobei das Hohlprofil einen in Längsrichtung verlaufenden Längsschlitz für eine gegenüber dem Hohlraum zumindest in Längsrichtung bewegbare, zumindest teilweise in den Längsschlitz eindringende Übertragungseinheit aufweist, eine Schleifleitung zur Versorgung mindestens eines an der Schleifleitung in deren Längsrichtung verfahrbaren elektrischen Verbrauchers mit elektrischer Energie, mit mindestens einem in Längsrichtung verlaufenden Leiterstrang mit einem elektrisch leitenden Leiterprofil zur Kontaktierung mit einem Schleifkontakt des Verbrauchers und mit mindestens einer in Längsrichtung verlaufenden Datenübertragungsvorrichtung, sowie ein Schleifleitungssystem. Die Erfindung löst die Aufgabe, eine gegen Eindringen von Schmutz und Feuchtigkeit in den Hohlraum des Hohlprofils geschützte Datenübertragung zu ermöglichen, durch eine Datenübertragungsvorrichtung, bei der mindestens ein längs des Hohlprofils verlaufendes Dichtelement zur Abdichtung zumindest eines Teils des Hohlraums vorgesehen ist, sowie durch eine Schleifleitung mit einer solchen Datenübertragungsvorrichtung sowie eine Schleifleitungssystem mit einer solchen Schleifleitung.

Die DE 198 07 792 A1 betrifft einen Verbinder für zwei aufeinanderfolgende Schleifleitungsteilstücke, die aus in Kunststofflängsprofilen angeordneten Stromschienen gebildet sind und in denen ein Stromabnehmerwagen verfahrbar ist, wobei die zu verbindenden Enden der Kunststofflängsprofile zueinander fluchtend angeordnet sind. Um einen Verbinder für zwei aufeinanderfolgende Schleifleitungsteilstücke zu schaffen, bei dem es trotz der unterschiedlichen thermischen Ausdehnungskoeffizienten von Metall und Kunststoff, insbesondere PVC, zu keinen Verwerfungen und Verformungen kommt, wird vorgeschlagen, dass der Verbinder als Verbindungsmuffe ausgebildet ist, welche die in einem vorbestimmten Bereich in Längsrichtung frei verschiebbaren Enden der Kunststofflängsprofile formschlüssig umfasst.

Da die Schleifkontakte des Stromabnehmerwagens per Federkraft gegen die Stromschienen gedrückt werden, um den Abrieb der Schleifkontakte auszugleichen und ein sicheres Entlangschleifen der Schleifkontakte an den Stromschienen sicherzustellen, weist dies den Nachteil auf, dass dabei insbesondere die unteren, in Nähe des Längsschlitz befindlichen Seitenwandungen nach außen gedrückt werden und somit die Laufrollen des Stromabnehmerwagens mit Seitenspiel auf den Laufflächen rollen, wodurch ein schwergängiger Lauf erfolgt.

Zudem werden derartige Kastenschleifleitungen aus einzelnen Teilen mit mehreren Metern Länge zusammengesetzt, wobei an den Stoßstellen zweier Kastenschleifleitungsprofile dann eine Stoßstelle entsteht. An den Stoßstellen werden auch die Stromschienen elektrisch leitend miteinander verbunden. Da die Ausdehnungskoeffizienten des Kunststoffprofils und der Stromschienen unterschiedlich sind, ergeben sich gerade bei langen Schleifleitungen unterschiedliche Längendifferenzen abhängig von deren Temperatur, welche durch einen Spalt zwischen den Schleifleitungsteilen gewährt werden muss. Üblicherweise werden zum Verbinden zweier aneinanderstoßender Kastenschleifleitungsprofile sogenannte Verbinderkappen verwendet, in welche die Kastenschleifleitungsteile von beiden Seiten aus eingesteckt werden. Dabei halten die Verbindungskappen die beiden Kastenschleifleitungsteile in Position zueinander, erlauben aber ein gewisses Spiel in Längsrichtung der Kastenschleifleitung, um die temperaturbedingten unterschiedlichen Längenänderungen ausgleichen zu können.

Beim Überfahren der betreffenden Stoßstellen wird der Stromabnehmerwagen in seiner Laufruhe gestört, sodass sich der Verschleiß der Schleifkontakte erhöht und ein entsprechend deutliches Geräusch entsteht. Gerade wenn eine Vielzahl von Stromabnehmerwagen in der Kastenschleifleitung verfahren, ist hierdurch eine nicht unerhebliche Lärmbeeinträchtigung gegeben.

Der Erfindung liegt deshalb die Aufgabe zugrunde, die oben genannten Nachteile zu beseitigen und insbesondere eine Schleifleitung, insbesondere Kastenschleifleitung, einen Stromabnehmerwagen sowie ein Schleifleitungssystem bereit zu stellen, welche die oben genannten Nachteile überwinden und eine möglichst gute Führung des Stromabnehmerwagens in der Schleifleitung bei möglichst geringem Verschleiß der Schleifleitungskontakte und reduzierter Lärmbelästigung ermöglichen. Ebenso soll ein möglichst gleichmäßiger Abrieb der Schleifleitungskontakte sichergestellt werden. Weiter soll die Standzeit der Stromschienen und die übertragbare Stromdichte bei unveränderter Baugröße der Kastenschleifleitung verbessert werden. Zudem soll ein Längsausgleich zwischen miteinander verbundenen Schleifleitungsabschnitten ermöglicht werden.

Die Erfindung löst diese Aufgabe mit einem Verbindungselement mit den Merkmalen des Anspruchs 1, einer Schleifleitung, insbesondere Kastenschleifleitung mit den Merkmalen des Anspruchs 17, einen Stromabnehmerwagen mit den Merkmalen des Anspruchs 20 sowie ein Schleifleitungssystem mit den Merkmalen des Anspruchs 22.

Eine eingangs genanntes Verbindungselement ist erfindungsgemäß dadurch gekennzeichnet, dass das Verbindungselement ein an die Innenkontur der Rahmenprofile angepasstes Verbindungsprofil aufweist, an welches sich in Längsrichtung beidseits zu den Teilabschnitten hin weisende, zum Umgreifen der Rahmenprofile an die Außenkonturen der Rahmenprofile angepasste Verbindungskonturen erstrecken.

Bevorzugt kann das Verbindungsprofil in Längsrichtung beidseits über seine Stirnseiten in den Bereich der Verbindungkontur hineinragende Überfahrschienen mit Überfahrgleisflächen für Hilfslauflächen der Laufrollen des Stromabnehmerwagens aufweisen. Weiter kann vorteilhaft, in eine Höhenrichtung gemessen, ein Abstand der Überfahrgleisflächen von Verbindungsgleisflächen des Verbindungsprofils, auf denen Laufflächen der Laufrollen des Stromabnehmerwagens rollen, einem Abstand der Hilfslaufflächen von den Laufflächen der Laufrollen entsprechen.

Die Höhenrichtung steht dabei bevorzugt senkrecht auf der Längsrichtung, wobei eine Querrichtung bevorzugt senkrecht zur Längsrichtung und/oder Höhenrichtung ist.

Vorteilhaft können die Überfahrschienen zur Anlage an das jeweils benachbarte Rahmenprofil ausgebildet sein, insbesondere zur teilweisen Auflage auf seitliche Rollenführungssteg der Rahmenprofile.

Dabei können die Überfahrschienen bevorzugt an ihren freien Enden in Höhenrichtung zu den freien Enden hin abfallende Auffahrrampen für die Hilfslaufflächen der Laufrollen aufweisen. Weiter können die Überfahrschienen in eine Querrichtung maximal bis zu den Seitenwandungen des Längsschlitzes reichen, bevorzugt mit den Seitenwandungen des Längsschlitzes bündig sein. Weiter kann der Abstand von Außenseiten der auf beiden Seiten des Längsschlitzes angeordneten Überfahrschienen in Querrichtung kleiner sein als ein innenseitiger Abstand von Spurkränzen der Laufrollen. Zudem kann vorteilhaft der Abstand zwischen Verbindungsgleisflächen von Außenseiten der auf beiden Seiten des Längsschlitzes angeordneten Überfahrschienen in Querrichtung kleiner sein als ein innenseitiger Abstand von Spurkränzen der Laufrollen.

Bevorzugt kann das Verbindungsprofil in Längsrichtung beidseits über seine Stirnseiten in den Bereich der Verbindungskontur hineinragende Verbindungsstege aufweisen. Dabei können die Verbindungsstege zur Anlage an das jeweils benachbarte Rahmenprofil ausgebildet sein, insbesondere zur Auflage auf öffnungsseitige Bodenwandungen, der Rahmenprofile und/oder zur seitlichen Anlage an Rollenlaufprofile der Rahmenprofile. Weiter können vorteilhaft die Verbindungskonturen in Längsrichtung verlaufende Haltestege aufweisen, welche zum Eingriff in entsprechende Rücksprünge an öffnungsseitigen Bodenwandungen der Rahmenprofile ausgebildet sind.

Ebenso können die Verbindungskonturen bevorzugt in Längsrichtung verlaufende Verbindungsstege aufweisen, welche zum Eingriff in entsprechende Rücksprünge an öffnungsseitigen Bodenwandungen der Rahmenprofile ausgebildet sind.

Bevorzugt kann das Verbindungsprofil in ein erstes und ein zweites Verbindungsprofil aufgeteilt sein, wobei am ersten Verbindungsprofil eine seitliche Verbindungsöffnung vorgesehen ist, in die eine am zweiten Verbindungsprofil angeordnete und in Längsrichtung über dieses zum ersten Verbindungsprofil hin ragende seitliche Verbindungslasche zum Befestigen der beiden Verbindungsprofile aneinander vorgesehen ist.

Weiter kann am zweiten Verbindungsprofil bevorzugt eine seitliche Verbindungsöffnung vorgesehen sein, in die eine am ersten Verbindungsprofil angeordnete und in Längsrichtung über dieses zum zweiten Verbindungsprofil hin ragende seitliche Verbindungslasche zum weiteren Befestigen der beiden Verbindungsprofile aneinander vorgesehen ist.

Dabei kann bevorzugt am ersten Verbindungsprofil eine Rastlasche vorgesehen sein, die mit einer am zweiten Verbindungsprofil angeordneten Rastnase zusammenwirkt, wobei beim Zusammensetzen der Verbindungsprofile in Längsrichtung die Rastlasche über die Rastnase geschoben wird und mit dieser verrastet, und wobei bevorzugt am zweiten Verbindungsprofil eine weitere Rastlasche vorgesehen ist, die mit einer am ersten Verbindungsprofil angeordneten weiteren Rastnase zusammenwirkt, wobei beim Zusammensetzen der Verbindungsprofile in Längsrichtung die weitere Rastlasche über die weitere Rastnase geschoben wird und mit dieser verrastet. Ebenso kann vorteilhaft am ersten und zweiten Verbindungsprofil jeweils ein Teil von Einsetzöffnungen für Schienenverbinder vorgesehen sein, in welche die Schienenverbinder im zusammengebauten Zustand des ersten und zweiten Verbindungsprofils aufnehmbar ist. Dabei können die Schienenverbinder vorteilhaft jeweils eine elektrische Verbindungsklemme mit U-förmigen Klemmschenkeln aufweisen, wobei die U-förmigen Klemmschenkel zum beidseitige Anliegen an nach außen umgebogene Enden von durch die Verbindungsprofile in Längsrichtung verlaufenden Stromschienen der zu verbindenden Teilabschnitte der Schleifleitung vorgesehen sind. Dabei können die Verbindungsklemmen bevorzugt jeweils in einem Aufnahmeraum eines jeweiligen Klemmkopfs gehalten sein. Ebenso können die Einsetzöffnungen und die Schienenverbinder vorteilhafte Raststege bzw. Rastnasen zum Verrasten der Schienenverbinder in der jeweiligen Einsetzöffnung aufweisen. In einer vorteilhaften Ausgestaltung können dabei die Raststege und/oder Rastnasen am jeweiligen Klemmkopf angeordnet sein. Der Klemmkopf kann vorteilhaft Entriegelungsöffnungen für ein Werkzeug zum Öffnen der durch die Rastnasen und Raststege gebildeten Rastverbindung aufweisen.

Vorteilhaft können das oder die Verbindungsprofile kastenförmig ausgebildet sein, wobei bevorzugt das kastenförmige Verbindungsprofil einander gegenüberliegende Verbindungsseitenwandungen aufweisen kann, welche durch eine Verbindungsoberwandung miteinander verbunden sind. Die Verbindungsseitenwandungen können bevorzugt auf ihrer der Verbindungsoberwandung gegenüberliegenden Seite Verbindungsbodenwandungen aufweisen, zwischen denen der Längsschlitz verlaufen.

Weiter können die Verbindungseitenwandungen bevorzugt mit der Verbindungsoberwandung und/oder den Verbindungsbodenwandungen mittels hierzu in einem Winkel verlaufender Verbindungsschrägwandungen verbunden sein, insbesondere wobei der Winkel bevorzugt 35° bis 55°, besonders bevorzugt 40° bis 50° und ganz besonders bevorzugt 44° bis 46° beträgt. Vorteilhaft können die Verbindungsschrägwandungen schräge Verbindungsstromschienenhalterungen und/oder die Verbindungsoberwandung weitere Verbindungsstromschienenhalterungen zur Halterung von Stromschienen der Teilabschnitte der Schleifleitung aufweisen, wobei die Verbindungsstromschienenhalterungen bevorzugt auf entsprechende Stromschienenhalterungen der Rahmenprofile ausgerichtet sind.

In einer vorteilhaften Fortbildung können das oder die Verbindungsprofile mindestens eine, bevorzugt seitliche Verbindungsführungsnut für einen oder mehrere, bevorzugt seitliche entsprechende Führungsstege des Stromabnehmerwagens aufweisen, wobei die Verbindungsführungsnuten bevorzugt in Längsrichtung auf Führungsnuten der Rahmenprofile der Schleifleitung ausgerichtet sind.

Eine eingangs genannte Schleifleitung ist erfindungsgemäß dadurch gekennzeichnet, dass zum Verbinden der Teilabschnitte der Schleifleitung ein in den Ansprüchen sowie oben und nachfolgend beschriebenes Verbindungselement vorgesehen ist. Bevorzugt umfasst die Schleifleitung dann die Teilabschnitte und das Verbindungselement bzw. mehrere Verbindungselemente, sofern die Schleifleitung mehrere zu verbindende Teilabschnitte aufweist.

Vorteilhaft können die Rahmenprofile kastenförmig ausgebildet sein, und bevorzugt die die Stromschienen in den Ecken des kastenförmigen Rahmenprofils angeordnet sein. Weiter kann das kastenförmige Rahmenprofil einander gegenüberliegende Seitenwandungen aufweisen, welche durch eine Oberwandung miteinander verbunden sind, insbesondere wobei die Seitenwandungen auf ihrer der Oberwandung gegenüberliegenden Seite Bodenwandungen aufweisen, zwischen denen der Längsschlitz verläuft. Insbesondere können die Seitenwandungen mit der Oberwandung und/oder den Bodenwandungen mittels hierzu in einem Winkel verlaufender Schrägwandungen verbunden sein, insbesondere wobei der Winkel bevorzugt 35° bis 55°, besonders bevorzugt 40° bis 50° und ganz besonders bevorzugt 44° bis 46° beträgt. Dabei können sich die Schrägwandungen vorteilhaft mit Stabilisierungsstegen an der benachbarten Seitenwandung, Oberwandung und/oder Bodenwandung abstützen, insbesondere wobei die Stabilisierungsstege bevorzugt im Winkel von 90° an den Schrägwandungen angeordnet sind. Weiter können zwischen benachbarten Schrägwandungen Stabilisierungswandungen verlaufen, insbesondere wobei die Stabilisierungswandungen über Seitenstabilisierungsstege mit der jeweils benachbarten Seitenwandung verbunden sind. Vorteilhaft können die Stromschienen an den Schrägwandungen angeordnet sein, insbesondere wobei im Innenraum eine weitere Stromschiene für mindestens einen weiteren Schleifkontakt des Stromabnehmerwagens vorgesehen ist. Dazu können vorteilhaft die Stromschienen Schleifflächen aufweisen, insbesondere wobei die Stromschienen bandförmigen Querschnitt aufweisen, wobei die breiteren Bandflächen die Schleifflächen ausbilden.

Die Stromschienen können bevorzugt in Stromschienenhalterungen der Schleifleitung angeordnet sein, insbesondere wobei die Stromschienenhalterungen U-förmigen Querschnitt mit die jeweilige Stromschiene umgreifenden, zueinander zugewandten Schienenstegrücksprüngen aufweisen.

Weiter können die Stromschienen über die Enden der Teilabschnitte in Verbindungsstromschienenhalterungen des oder der Verbindungsprofile reichen. Bevorzugt können die Enden der Stromschienen nach außen gebogen sein, insbesondere in einem Winkel von bevorzugt 85° bis 95°, besonderes bevorzugt in einem Winkel von 88° bis 92°, und ganz besonders bevorzugt in einem Winkel von 90°. Dabei können die umgebogenen Enden der Stromschienen in Einsetzöffnungen des Verbindungselements ragen und jeweils von elektrischen Verbindungsklemmen in Längsrichtung umgriffen werden.

Die Verbindungsprofile können zu den benachbarten Rahmenprofilen in Längsrichtung jeweils in einem Abstand zum Ermöglichen eines jeweiligen längsveränderlichen Spalts angeordnet sein, welcher von der jeweiligen Verbindungskontur und/oder von den Überfahrschienen überbrückt wird.

Eine eingangs genannter Stromabnehmerwagen ist erfindungsgemäß dadurch gekennzeichnet, dass der Stromabnehmerwagen zum Verfahren in Längsrichtung entlang der Schleifleitung drehbar gelagerte Laufrollen aufweisen, die mit ihren Laufflächen auf entsprechenden Gleisflächen der Rahmenprofile der Schleifleitung rollen.

Dabei können die Laufrollen bevorzugt mindestens eine Hilfslauffläche mit kleinerem Durchmesser als die Laufflächen zum Rollen auf einer Überfahrgleisfläche von Überfahrschienen des Verbindungselements aufweisen. Weiter können vorteilhaft die Laufrollen Spurkränze zum seitlichen Führen der Laufrollen an seitlichen Rollenführungsstegen der Rahmenprofile und/oder Überfahrschienen des Verbindungselements aufweisen, wobei die Laufflächen bevorzugt an den Stirnseiten der Spurkränze angeordnet sind. Ebenso kann die Hilfslauffläche bevorzugt zwischen den Spurkränzen der Laufrollen angeordnet sein.

Weiter kann die Laufflächen der Laufrollen zum Rollen auf Verbindungsgleisflächen des Verbindungselements ausgebildet sein. Zudem kann vorteilhaft jeder der Schleifkontakte mittels eines Zustellmechanismus in Richtung der zugeordneten Stromschienen bewegbar sein. Zudem kann der Zustellmechanismus die Schleifkontakte dauerhaft und/oder federelastisch an die Stromschienen drücken. Weiter kann der Stromabnehmerwagen bevorzugt mittels drehbar gelagerter Führungsrollen an Führungen der Schleifleitung führbar sein. Zudem kann der Stromabnehmerwagen vorteilhaft in einem Innenraum der Schleifleitung in Längsrichtung verfahrbar angeordnet sein.

Eine eingangs genanntes Schleifleitungssystem ist erfindungsgemäß dadurch gekennzeichnet, dass die Schleifleitung und der Stromabnehmerwagen wie in den Ansprüchen sowie oben und nachfolgend beschrieben ausgebildet sind. Dabei umfasst das Schleifleitungssystem eine Schleifleitung mit zwei oder mehreren Teilabschnitten, welche durch ein oder mehrere Verbindungselemente verbunden sind, sowie einen oder ggf. auch mehrere Stromabnehmerwagen.

Weitere Besonderheiten und Vorteile der Erfindung ergeben sich aus der folgenden Beschreibung eines bevorzugten Ausführungsbeispiels anhand der Zeichnungen. Diese zeigen:
- **Fig. 1**: eine Schnittansicht durch eine Kastenschleifleitung eines erfindungsgemäßen Schleifleitungssystems längs der Schnittlinie A-A in Fig. 2 mit einer Seitenansicht eines in der Kastenschleifleitung verfahrbaren Stromabnehmerwagens;
- **Fig. 2**: eine Seitenansicht auf den in Fig. 1 rechten Teil des Schleifleitungssystems von in Fig. 1 rechts ohne Verbindungselement und linkes Rahmenprofil;
- **Fig. 3**: die Seitenansicht auf das Rahmenprofil der Kastenschleifleitung aus Fig. 2;
- **Fig. 4**: eine Vorderansicht auf den Stromabnehmerwagen aus Fig. 1;
- **Fig. 5**: eine Seitenansicht auf den Stromabnehmerwagen aus Fig. 4 von in Fig. 4 rechts;
- **Fig. 6**: eine Seitenansicht auf das Schleifleitungssystem aus Fig. 1;
- **Fig**. **7**: eine dreidimensionale Schrägansicht auf das Schleifleitungssystem aus Fig. 1 in Explosionsdarstellung;
- **Fig. 8**: eine dreidimensionale Schrägansicht auf das Verbindungselement aus Fig. 7;
- **Fig. 9**: eine Draufsicht auf das Verbindungselement aus Fig. 8;
- **Fig. 10**: eine Detailansicht auf einen Teil des Verbindungselements aus Fig. 1;
- **Fig. 11**: eine Seitenansicht auf das Verbindungselement aus Fig. 8 von rechts entsprechend der Seitenansicht aus Fig. 3;
- **Fig. 12**: eine Seitenansicht auf das Schleifleitungssystem aus Fig. 7 von rechts entsprechend der Seitenansicht aus Fig. 2 mit Stromabnehmerwagen;
- **Fig. 13**: das Detail A aus Fig. 2;
- **Fig. 14**: das Detail B aus Fig. 12.

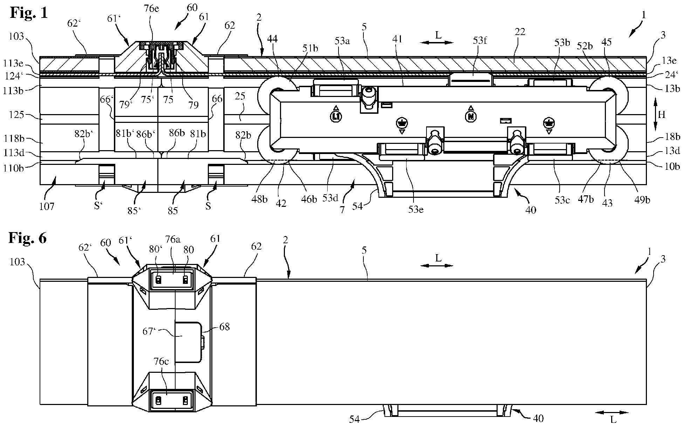

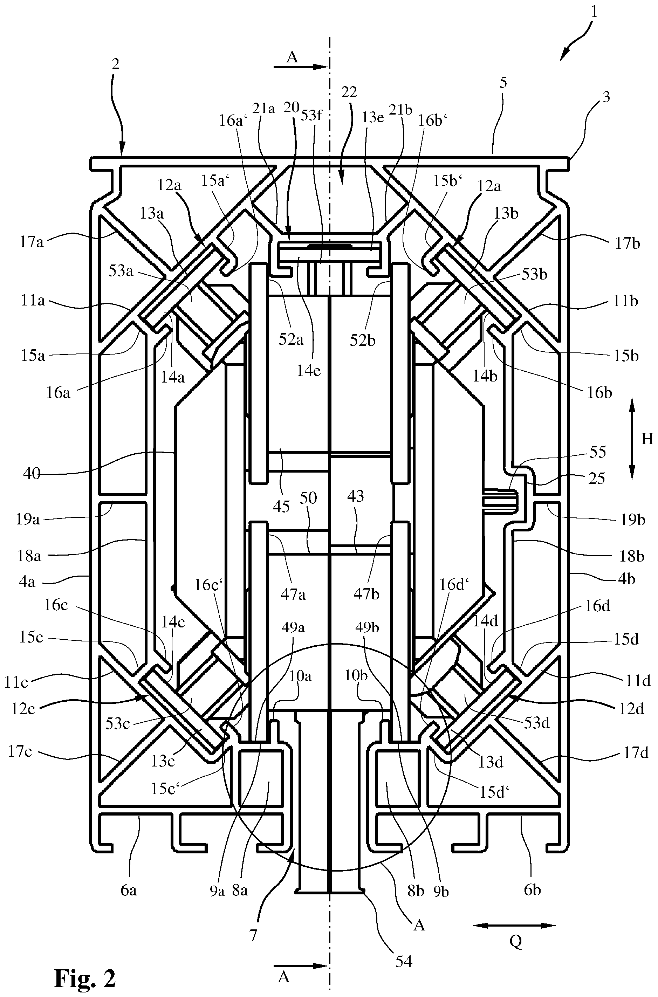

Fig. 1 und 2 zeigen ein Schleifleitungssystem 1 mit einer Kastenschleifleitung 2 und einem in einem Innenraum I der Kastenschleifleitung 2 in eine Längsrichtung L verfahrbaren Stromabnehmerwagen 40, wobei in Fig. 1 die Kastenschleifleitung 2 in einer Schnittansicht längs der Schnittlinie A-A aus Fig. 2 gezeigt ist, während der Stromabnehmerwagen 40 nur zum Teil in Schnittansicht gezeigt ist.

Dabei ist die Kastenschleifleitung 2 aus einem kastenförmigen Rahmenprofil 3 aus einem elektrisch isolierenden Material, bevorzugt Kunststoff und bevorzugt einstückig gebildet. Es können aber auch andere Materialien verwendet werden, beispielsweise mit einer isolierenden Kunststoffschicht überzogene Aluminiumbleche o.ä. Bevorzugt wird die Kastenschleifleitung 2 in der in den Zeichnungen gezeigten Position montiert.

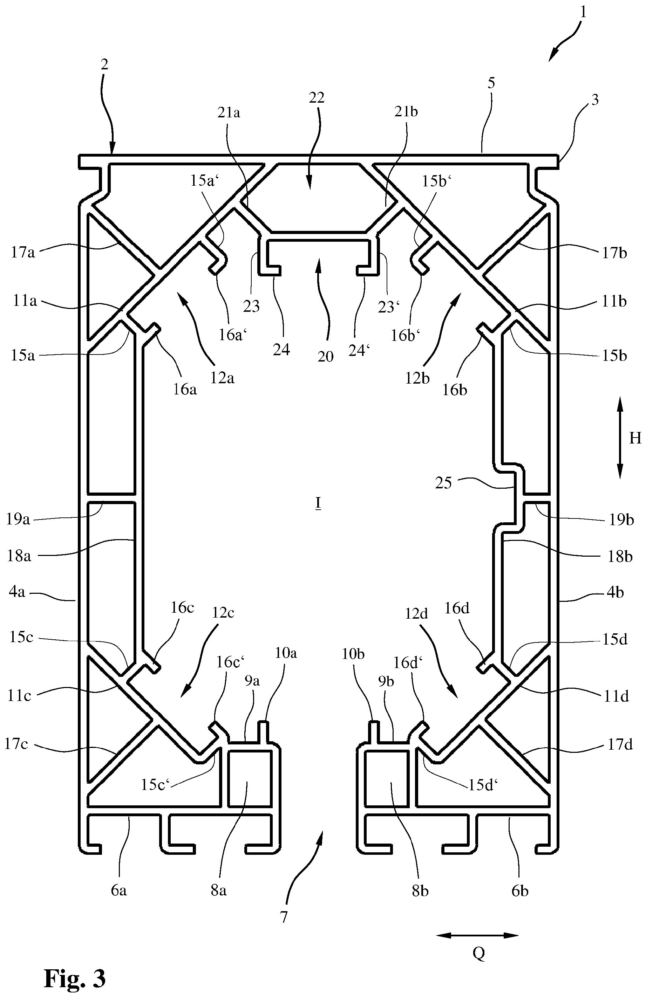

Das Rahmenprofil 3 weist insbesondere in Fig. 2 und 3 gut erkennbare, einander gegenüberliegende, bevorzugt parallel zueinander verlaufende Seitenwandungen 4a, 4b auf, welche durch eine senkrecht hierzu verlaufende Oberwandung 5 am oberen Ende des Rahmenprofils 3 miteinander verbunden sind. Am unteren Ende des Rahmenprofils 3 weisen die Seitenwandungen 4a, 4b senkrecht hierzu verlaufende öffnungsseitige Bodenwandungen 6a, 6b auf, welche zwischen sich einen Längsschlitz 7 zum Innenraum I des Rahmenprofils 3 freilassen. Im Bereich des Längsschlitz 7 weisen die Bodenwandungen 6a, 6b kastenförmige Rollenlaufprofile 8a, 8b auf, welche auf ihren dem Innenraum I zugewandten Oberseiten als Gleisflächen 9a, 9b mit senkrecht, also in den Zeichnungen nach oben in den Innenraum I ragenden seitlichen Rollenführungsstegen 10a, 10b ausgebildet sind. Die Seitenwandungen 4a, 4b verlaufen vorliegend also in eine quer zur Längsrichtung L verlaufende Höhenrichtung H, und die Oberwandung 5 in eine quer zur Längsrichtung und quer zu den Seitenwandungen 4a, 4b verlaufende Querrichtung Q. Bevorzugt können die Richtungen L, H und Q im Rahmen der Montage- und Fertigungsgenauigkeiten senkrecht zu jeweils einer oder beiden der anderen Richtungen stehen.

Zwischen den Seitenwandungen 4a, 4b und der Oberwandung 5 sind hier im 45° Winkel zu den Seitenwandungen 4a, 4b verlaufenden Schrägwandungen 11a, 11b vorgesehen, und entsprechend zwischen den Seitenwandungen 4a, 4b und den kastenförmigen Rollenlaufprofilen 8a, 8b ebenfalls hier i m 45° Winkel zu den Seitenwandungen 4a, 4b verlaufende Schrägwandungen 11c, 11d. Auf ihrer dem Innenraum I zugewandten Seiten weisen die Schrägwandungen 11a-d U-förmige Stromschienenhalterungen 12a-d auf, in welchen Stromschienen 13a-d gehalten werden.

Die Stromschienen 13a-d sind bevorzugt aus einem gut elektrisch leitenden Bandmaterial gebildet, wobei dem Innenraum I zugewandte, für den elektrischen Kontakt ausgebildete Schleifflächen 14a-d im selben Winkel von 45° Grad wie die Stromschienenhalterungen 12a-d verlaufen. Ggf. können die Stromschienen 13a-d auch aus einem anderen elektrisch gut leitenden Material bestehen, welches auch andere Querschnittsformen aufweisen kann. Dabei verlaufen die Schleifflächen 14a-d jeweils benachbarter Stromschienen 13a-d, beispielsweise die Schleifflächen 14a und 14b bzw. 14a und 14c jeweils senkrecht in einem 90° Winkel zueinander. Einander gegenüberliegende Schleifflächen 14a und 14d bzw. 14b und 14c hingegen verlaufen in einem Winkel von 180° zueinander, also zueinander parallel.

Die gleich ausgebildeten Stromschienenhalterungen 12a-d weisen in den Innenraum I ragende, einander gegenüberliegende seitliche Schienenhaltestege 15a-d, 15a'-d' auf, an denen bevorzugt an ihren vorderen Enden einander zugwandte Schienenstegrücksprünge 16a-d, 16a'-d' vorgesehen sind, welche die Stromschienen 13a-d umgreifen und in den Stromschienenhalterungen 12a-d halten. Der Abstand der Schienenstegrücksprünge 16a-d, 16a'-d' von den Schrägwandungen 11a-d ist so bemessen, dass die Stromschienen 13a-d zwar einfach in die Stromschienenhalterungen 12a-d stirnseitig eingezogen bzw. eingeschoben werden können, und andererseits gut darin gehalten werden. Soweit hier und im nachfolgenden nur Bezug auf die Schienenhaltestege 15a, 15a' und daran angeordneten Schienenstegrücksprünge 16a, 16a' der in Fig. 2 oberen linken Stromschienenhalterungen 12a genommen wird, gelten entsprechende Ausführungen jedoch auch für die Schienenhaltestege 15b-d, 15b'-d' und daran angeordneten Schienenstegrücksprünge 16b-d, 16b'-d' der weiteren Stromschienenhalterungen 12b-d.

Um die Stromschienen 10a-d in ihrer schrägen Position zu halten und bei der Vorbeifahrt des Stromabnehmerwagens 40 zu stabilisieren, verlaufen von den Schrägwandungen 11a-d der Stromschienenhalterungen 12a-d zu den Seitenwandungen 4a, 4b Stabilisierungsstege 17a-d, bevorzugt senkrecht zu den Schrägwandungen 11a-d. Die Stabilisierungsstege 17a-d verhindern insbesondere ein nach außen, vom Innenraum I weg gerichtetes Ausweichen der Schrägwandungen 11a-d.

Zur weiteren Stabilisierung der Form des Rahmenprofils 3 der Kastenschleifleitung 2 verlaufen zwischen den einander zugewandten Schienenhaltestegen 15a-d, 15a'-d' der an der gleichen Seitenwandung 4a bzw. 4b übereinander angeordneten Paaren von Stromschienenhalterungen 12a und 12c bzw. 12b und 12d seitliche Stabilisierungswandungen 18a bzw. 18b, welche über Seitenstabilisierungsstege 19a bzw. 19b mit der jeweiligen zugeordneten Seitenwandung 4a bzw. 4b verbunden sind.

Parallel zur Oberwandung 5 ist im oberen Bereich zwischen den schrägen Stromschienenhalterungen 12a, 12b eine weitere, waagrecht bzw. horizontal verlaufende obere Stromschienenhalterung 20 vorgesehen, welche mittels aufeinander zulaufender schräger Innenstege 21a, 21b an den Schrägwandungen 11a, 11b den angeordnet ist. Die Oberwandung 5, die Schrägwandungen 11a, 11b, die schrägen Innenstege 21a, 21b und die obere Stromschienenhalterung 20 bilden einen wabenförmigen Innenraum 22. Ggf. kann statt der schrägen Innenstege 21a, 21b aber auch eine waagrechte Wandung zwischen den Schrägwandungen 11a, 11b vorgesehen werden, wobei der wabenförmigen Innenraum 22 vorteilhaft für die Stabilität der Stromschienenhalterung 20 ist, insbesondere beim Vorbefahren des Stromabnehmerwagens 40. Auch kann die Stromschienenhalterung 20 unmittelbar an der Oberwandung 5 angeordnet werden. Weiter weist die im wesentlichen wieder U-förmige Stromschienenhalterung 20 wieder seitliche Schienenhaltestege 23, 23' und daran angeordnete Schienenstegrücksprünge 24, 24' auf, welche eine Stromschiene 13e umfassen. Die Stromschiene 13e ist ausgebildet wie die oben beschriebenen Stromschienen 13a-d.

Um einen längs der Kastenschleifleitung 2 beweglichen elektrischen Verbraucher mit Strom zu versorgen, ist der Stromabnehmerwagen 40 in der Kastenschleifleitung 2 in der Längsrichtung L verfahrbar. Dabei weist der Stromabnehmerwagen 40 einen Rahmen 41 auf, an dessen in Längsrichtung L vorderen bzw. hinteren Ende zum einen unten angeordnete Laufrollen 42, 43 und zum anderen oben angeordnete Führungsrollen 44, 45 drehbar um senkrecht zur Längsrichtung L und insbesondere in Querrichtung Q verlaufende Achsen gelagert sind. Die Rollen 42-45 sind als Doppelspurkranzrollen ausgebildet.

Die Laufrollen 42, 43 sind identisch ausgebildet, so dass nachfolgend vor allem die in den Fig. 1, 2 und 4, 5 gezeigte rechte Laufrolle 43 beschrieben wird, entsprechende Ausführungen gelten auch für die linke Laufrolle 42. Die Laufrolle 43 weist dabei seitliche Spurkränze 47a, 47b auf, welche von außen die beiden seitlichen Rollenführungsstege 10a, 10b umgreifen, und mit stirnseitigen Laufflächen 49a, 49b auf den Gleisflächen 9a, 9b des Rahmenprofils 3 rollen. Weiter weisen die Laufrollen 42, 43 zwischen den Spurkränzen 47a, 47b eine nach innen zurückgesetzte Hilfslauffläche 50 mit geringerem Durchmesser als die Laufflächen 49a, 49b auf. In Fig. 1 ist dabei der seitliche Rollenführungssteg 10b im Bereich der Laufrollen 42, 43 durchbrochen gezeichnet, um die Auflage der Laufflächen 48b, 49b auf der Gleisfläche 9b sowie die Spurkränze 46b, 47b besser darstellen zu können.

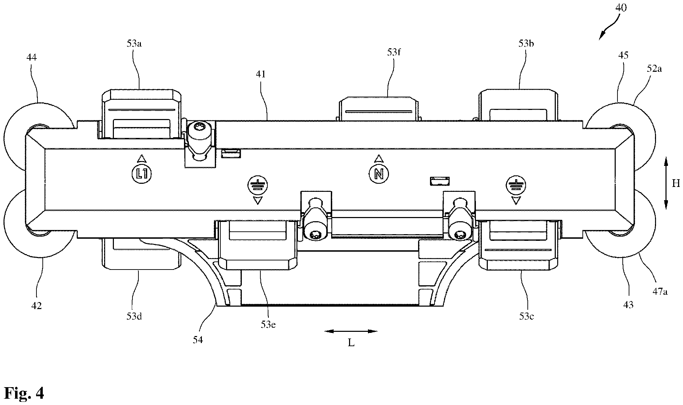

Die oberen Führungsrollen 44, 45 sind ebenfalls identisch ausgebildet, so dass nachfolgend vor allem die in den Fig. 1, 2 und 4, 5 gezeigte rechte Führungsrolle 45 beschrieben wird, entsprechende Ausführungen gelten auch für die linke Führungsrolle 44. Die Führungsrolle 45 weist dabei ebenfalls seitliche Spurkränze 52a, 52b auf, welche die Schienenhaltestege 23, 23' der Stromschienenhalterung 20 umgreifen. Dabei ist der Abstand zwischen den Spurkränzen 52a, 52b der oberen, in Fig. 1 und 4 rechten Führungsrolle 45 so an die Breite der oberen Stromschienenhalterung 20 angepasst, das ein gewisses Spiel besteht, die Spurkränze 52a, 52b also nicht unnötig an der Stromschienenhalterung 20 schleifen.

Wie in Fig. 2 gut erkennbar, umgreifen die Spurkränze 52a, 52b somit die Schienenhaltestege 23, 23' der Stromschienenhalterung 20 und stellen somit sicher, dass der Stromabnehmerwagen 2 möglichst ohne seitliches Ausweichen in der Querrichtung Q in der Kastenschleifleitung 2 verfahren werden kann.

Meist sind am Stromabnehmerwagen 40 mehrere Schleifkontakte 52a-f vorgesehen, welche mit ihren Stirnseiten die Schleifflächen 14a-e der Stromschienen 13a-e wie folgt kontaktieren.

Die Schleifkontakte 53a, 53b, 53d kontaktieren die Stromschienen 13a, 13b, 13d und dienen als Phasenleiterschleifkontakte.

Ein die Stromschiene 13c kontaktierendes Schleifkontaktpaar 53c, 53e dient als Erdungskontakt für den elektrischen Verbraucher. Um auch beim Überfahren einer Trennstelle zwischen zwei aneinander anstoßenden Teilen der Kastenschleifleitung 2 die ständige Erdung des elektrischen Verbrauchers sicherstellen zu können, sind die Schleifkontakte 53c und 53e deshalb in Längsrichtung L, welche auch der Fahrrichtung des Stromabnehmerwagens 40 entspricht, im Abstand voneinander angeordnet.

Der obere Schleifkontakt 53 f dient zur Verbindung mit der oberen Stromschiene 13e und dient als Nullpotentialleiter.

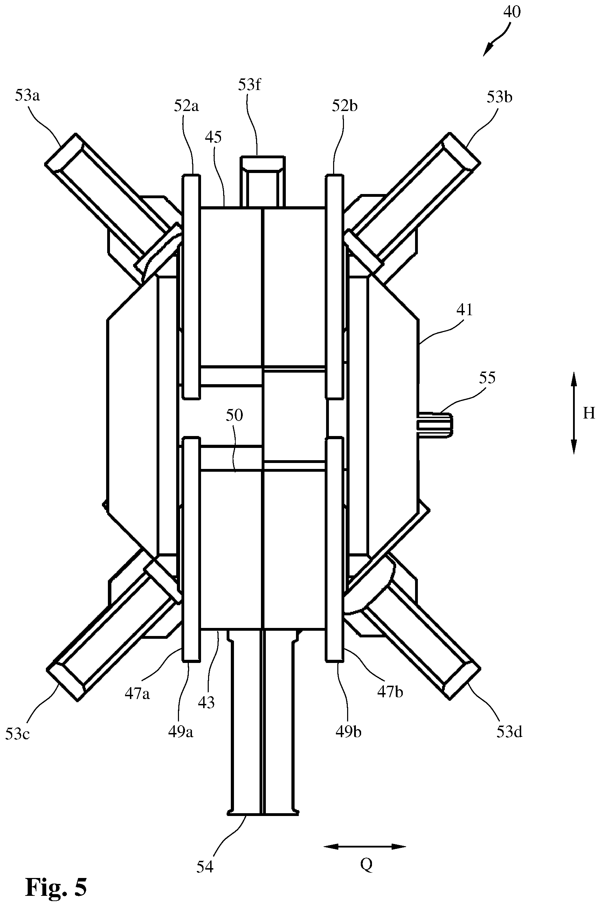

Um einen sicheren dauerhaften, ununterbrochenen Kontakt der Schleifkontakt 53a-f mit den Schleifflächen 14a-e, auch bei abnutzungsbedingter Verkürzung der Schleifkontakte 53a-f, sicherzustellen, werden diese jeweils mittels einer eigenen, gemeinsamen oder teilweise gemeinsamen Zustellvorrichtung dauerhaft in Richtung der Schleifflächen 14a-e gedrückt, beispielsweise über jeweilige Federmechanismen. Dies ist u.a. daran erkennbar, dass sich die Schleifkontakte 53a-f in Fig. 2 in einer eingezogenen Stellung befinden, während sie sich in Fig. 4 und 5 in einer vollständig ausgefahrenen Stellung befinden. Bei Einfahren des Stromabnehmerwagens 40 in die Kastenschleifleitung 2 werden die Schleifkontakte 53a-f dann bevorzugt mittels eines Einfahrtrichters in die Kastenschleifleitung 2 eingefahren und dabei in die in Fig. 2 gezeigte Stellung bewegt, in der sie mittels einer Vorspannung, beispielsweise durch entsprechend angeordnete Federelemente, an die Schleifflächen 14a-e gedrückt werden.

Ein in Längsrichtung L trichterförmigen Kabelkanal 54 des Stromabnehmerwagens 40 reicht dann, wie in Fig. 1 und 2 gezeigt, durch den Längsschlitz 7, so dass mit den Schleifkontakten 53a-f verbundene Kabel oder Leitungen durch den Kabelkanal 54 zum elektrischen Verbraucher geführt werden können.

Da die Schleifkontakte 53a-d entsprechend der Schleifflächen 14a-d im 45° Winkel zueinander und jeweils paarweise einander gegenüberliegend angeordnet sind, ergibt sich eine gleichmäßige Lastverteilung der Anpresskräfte an die Schleifkontakte 53a-d in der Kastenschleifleitung 2. Da die Belastung zudem in Richtung der Ecken der Kastenschleifleitung 2 erfolgt, kann die erhöhte Steifigkeit der Kastenschleifleitung 2 in den Ecken ausgenutzt werden. Da die Schleifkontakte 53a-d nicht, wie bei bekannten Kastenschleifleitungen, nur auf einander gegenüberliegende Seitenwandungen angeordnet sind, können die Stromschienen 13a-d bei gleicher Baugröße der Kastenschleifleitung 2 auch dicker ausgebildet werden, sodass zum einen eine längere Standzeit der Stromschienen 13a-d ermöglicht wird, und zum anderen höhere Ströme übertragen werden können.

Weiter ist am kastenförmigen Rahmenprofil 3 an der Seitenwandung 4b eine in Fig. 1 bis 3 und 12 gut erkennbare, in Längsrichtung L verlaufende seitliche Führungsnut 25 vorgesehen, in welche ein in Fig. 2, 5 und 12 gut erkennbarer zugeordneter seitlicher Führungssteg 55 des Stromabnehmerwagens 40 eingreift.

Üblicherweise werden Schleifleitungen wie die Kastenschleifleitung 2 aufgrund der oft großen Längen, beispielsweise mehrere 10 Meter oder 100 Meter, aus mehreren Schleifleitungsteilabschnitten zusammengefügt, wobei vorliegend die Enden von zwei Teilabschnitten 2a, 2b der Schleifleitung 2 exemplarisch gezeigt sind und beschrieben werden. Die Teilabschnitte 2a und 2b werden folglich nicht aus einem einzigen Rahmenprofil 3, sondern aus mehreren Rahmenprofilen 3 zusammengebaut, wobei insbesondere in Fig. 1, 2 und 7 eine solches weiteres kastenförmige Rahmenprofil 103 gezeigt ist. Dabei ist das Rahmenprofil 103 identisch zum dem oben beschriebenen Rahmenprofil 3 ausgebildet, so dass Ausführungen, Erläuterungen und Angaben zum Rahmenprofil 103 entsprechend gelten. Dem Rahmenprofil 3 entsprechende Teile des Rahmenprofils 103 tragen die gleichen Bezugsziffern wie die des Rahmenprofils 3 mit einer vorangestellten Ziffer "10" bei Bezugsziffern kleiner 10 und einer vorangestellten Ziffer "1" bei Bezugsziffern größer 9.

Nachfolgend wird nun beschrieben, wie das in Fig. 1, 6 und 7 linke Ende des kastenförmigen Rahmenprofils 3 der Schleifleitung 5 mit dem in Fig. 1, 6 und 7 links gezeigten rechten Ende des weiteren Rahmenprofils 103 mittels eines insbesondere in Fig. 1, 6 bis 12 und 14 gezeigten Verbindungselements 60 sowohl mechanisch als auch elektrisch leitend verbunden werden kann.

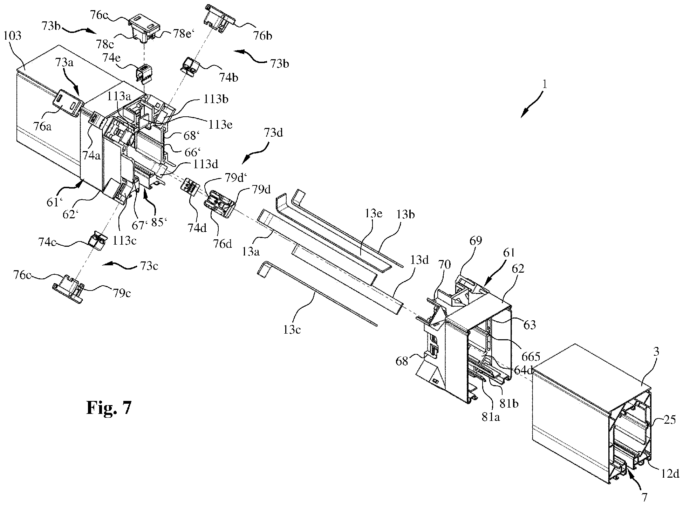

Das Verbindungselement 60 weist dabei ein erstes Teilverbindungselement 61 und ein zweites Teilverbindungselement 61' auf, welche identisch ausgebildet sind. Dabei sind die Innenkonturen der Teilverbindungselemente 61, 61' so ausgestaltet, das im endmontierten verbundenen Zustand der Stromabnehmerwagen 40 durch das Verbindungselement 60 geführt hindurchfahren kann wie durch die Rahmenprofile 3, 103, ohne das der elektrische Kontakt zwischen den Stromschienen 13a-e des ersten kastenförmiges Rahmenprofils 3 und in Fig. 1 und 7 gut erkennbaren Stromschienen 113a-e des zweiten kastenförmigen Rahmenprofils 103 sowie zwischen den Stromschienen 13a-e bzw. 113a-e und den Schleifkontakten 53a-f unterbrochen wird.

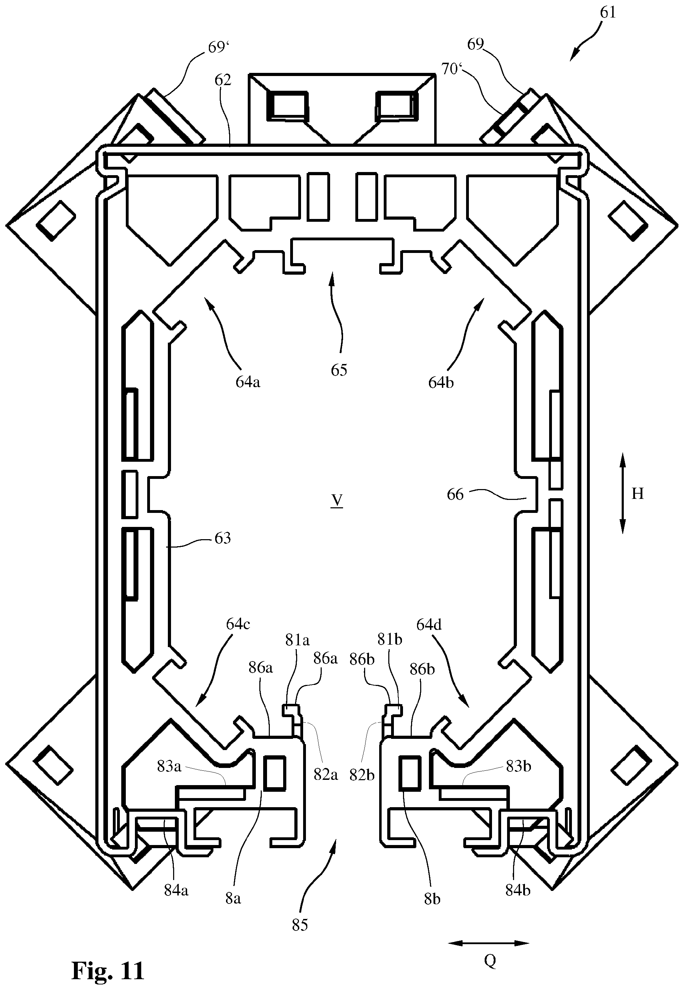

Dabei weisen die Teilverbindungselemente 61,61' jeweils eine Verbindungskontur 62, 62' auf, welche die Enden der kastenförmigen Rahmenprofile 3 bzw. 103 umgreift, wie insbesondere in Fig. 1, 7 und 11 gut erkennbar. Dabei ist die Innenkontur der Verbindungskontur 62, 62' an die Außenkontur der kastenförmigen Rahmenprofile 3 bzw. 103 angepasste, wie in Fig. 1 und 11 gut erkennbar.

Da die Teilverbindungselemente 61, 61' identisch ausgebildet sind, erfolgt die Erläuterungen nachfolgend vor allem anhand des Teilverbindungselements 61. Entsprechende Ausführungen gelten dann auch für das andere Teilverbindungselement 61'.

Auf der in Längsrichtung L jeweils anderen Seite sind die Teilverbindungselemente 61, 61' mit einem Verbindungsprofil 63, 63' ausgebildet, welche zum einen die mechanische, lösbare und elektrisch leitende Verbindung der Teilverbindungselemente 61, 61' miteinander ermöglichen, und zum anderen die Verfahrbarkeit und sicher Führung des Stromabnehmerwagens 40 unter dauerhafter Beibehaltung des elektrischen Kontakts zwischen den Schleifkontakten 53a-f und den Stromschienen 13a-e und 113a-e ermöglicht.

Andererseits soll zum Ausgleich einer unterschiedlichen Längsdehnung der kastenförmigen Rahmenprofile 3 bzw. 103 und der metallischen Stromschienen 13 bzw. 113, insbesondere durch Temperaturänderungen, ein Spalt S bzw. S' zwischen den Enden der kastenförmigen Rahmenprofile 3 bzw. 103 und der jeweiligen zugeordneten Stromschienen 13 bzw. 113 ermöglicht werden, wobei die Verbindungskonturen 62, 62' dabei auch als Berührungsschutz dienen. Damit die Spalte S, S' den Längsausgleich ermöglichen, können bevorzugt die nachfolgend im Detail beschriebenen Vorkehrungen getroffen werden.

Der Längenausgleich bedeutet, dass die stirnseitigen Enden der Rahmenprofile 3, 103 nicht direkt an die stirnseitigen Enden des Verbindungselements 60, insbesondere also die Verbindungsprofile 63, 63' anstoßen dürfen, sondern einen gewissen Abstand erlauben müssen, der sich auch ändern kann. Dabei muss aber sowohl die ununterbrochene elektrische Verbindung der Stromschienen 13a-e und 113a-e der Rahmenprofile 3 und 103 und andererseits auch die ununterbrochene mechanische Verbindung und insbesondere der Fahrweg für die Laufrollen 42, 43 des Stromabnehmerwagens 40 sichergestellt werden.

Hierzu sind die Verbindungsprofile 63, 63' weitgehend der Außen- und der Innenkontur der kastenförmigen Rahmenprofile 3, 103 nachgebildet, um die Führung des Stromabnehmerwagens 40 und die dauerhafte Kontaktierung der Stromschienen 13a-e und 113a-e mit den Schleifkontakten 53a-f zu gewährleisten. Die Verbindungsprofile 63, 63' verlängern insofern die Rahmenprofile 3, 103 im Bereich der Anschlussstelle beider aneinander.

So weisen die Verbindungsprofile 63, 63' den schrägen Stromschienenhalterungen 12a-d bzw. der oberen Stromschienenhalterung 20 entsprechende schräge Hilfsstromschienenhalterungen 64a-d bzw. eine weitere Hilfsstromschienenhalterung 65 für die Stromschienen 13a-e bzw. 113a-e auf. Weiter weisen die Verbindungsprofile 63, 63' seitliche Verbindungsführungsnuten 66, 66' auf, welche in ihrer Position den seitlichen Führungsnuten 25, 125 der Rahmenprofile 3, 103 entsprechen, wie insbesondere in Fig. 11 gut erkennbar. Hierdurch wird der seitliche Führungssteg 55 des Stromabnehmerwagens 40 auch im Bereich des Verbindungselements 60 gut geführt.

Ebenso weisen die Verbindungsprofile 63, 63 einander gegenüberliegende Verbindungsseitenwandungen auf, welche durch eine Verbindungsoberwandung miteinander verbunden sind. An den der Verbindungsoberwandung gegenüberliegenden Seite weisen die Verbindungsseitenwandungen Verbindungsbodenwandungen auf. Zwischen den Verbindungsbodenwandungen verläuft in Längsrichtung L ein Längsschlitz 85 des Verbindungselements 60, welcher mit dem Längsschlitz 7 bzw. 107 der Rahmenprofile 3, 103 fluchtet und zum Durchfahren des Kabelkanals 54 des Stromabnehmerwagens 40 dient. Bevorzugt können dabei die Verbindungseitenwandungen mit der Verbindungsoberwandung und/oder den Verbindungsbodenwandungen mittels hierzu in einem Winkel verlaufender Verbindungsschrägwandungen verbunden sein, wobei der Winkel hier 45° beträgt.

Bei der Montage werden die Teilverbindungselemente 61, 61' auf das jeweilige Ende der kastenförmigen Rahmenprofile 3 bzw. 103 aufgesteckt und dann wie nachfolgend beschrieben miteinander verbunden. So weist das Teilverbindungselement 61' auf seiner einen Seite eine in Fig. 2, 7 und 8 gezeigte Verbindungslasche 67' auf, welche in eine entsprechende Verbindungsöffnung 68 des anderen Teilverbindungselements 61 eingreift und dort mittels einer Schnappverbindung befestigt werden kann. Entsprechendes gilt für die in Querrichtung Q andere Seite, wo das Teilverbindungselement 61' eine Verbindungsöffnung 68' für eine zeichnerisch nicht dargestellte Verbindungslasche des Teilverbindungselements 61 mit entsprechender Schnappverbindung aufweist. Hierdurch können die die beiden Teilverbindungselemente 61, 61' fest miteinander verbunden werden.

Eine weitere Sicherung der Verbindung wird durch in Fig. 7 bis 9 erkennbare U-förmige Rastlaschen 69, 69' am ersten bzw. zweiten Teilverbindungselement 61, 61' ermöglicht, welche beim Zusammenstecken der Teilverbindungselemente 61, 61' über am jeweils anderen Teilverbindungselement 61', 61 angeordnete obere Rastnasen 70', 70 geschoben und dann durch diese verrastet werden können.

Wie in Fig. 1 und 7 gut erkennbar, sind die Enden der in den Verbindungsstromschienenhalterungen 64a-d und 65 bzw. 64a'-d' und 65' gehaltenen Stromschienen 13a-e bzw. 113a-e quer zur Längsrichtung L der Kastenschleifleitung 3 bzw. des Verbindungselements 60 in Höhenrichtung H der Kastenschleifleitung 2 bzw. des Verbindungselements 60 vom Innenraum I der der Kastenschleifleitung 2 bzw. dem entsprechenden Innenraum V des Verbindungselements 60 weg nach außen gebogen, bevorzugt um rund 90° und berühren sich mit diesen aufgebogenen Enden, insbesondere deren in Längsrichtung L zueinander weisenden Stirnseiten, wodurch ein breitflächiger elektrischer Kontakt bereitgestellt wird. Das Umbiegen kann bevorzugt erst bei der Endmontage vor Ort erfolgen.

Durch die umgebogenen Enden der Stromschienen 13a-e bzw. 113a-e wird bereits erreicht, dass die Teilverbindungselemente 61, 61' unverlierbar mit den Rahmenprofilen 3 bzw. 103 verbunden sind.

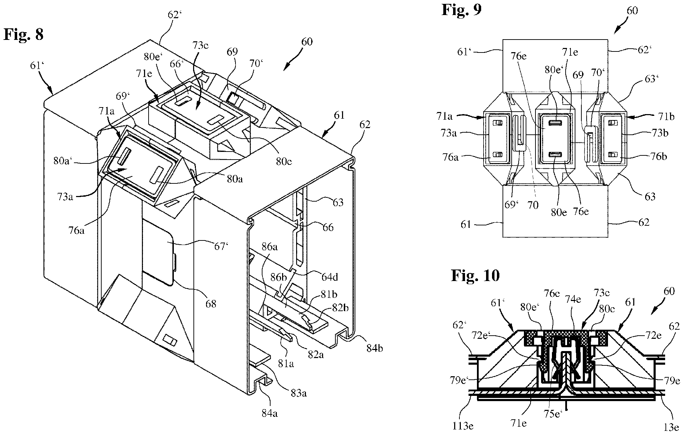

Um die Enden der Stromschienen 13a-e und 113a-e sicher aneinander zu halten und somit den dauerhaften elektrischen Kontakt sicherzustellen und Luftüberschläge zu vermeiden, sind an den Enden der Teilverbindungselemente 61, 61' im montierten Zustand Einsetzöffnungen 71a-e mit darin angeordneten Raststegen 72e, 72e` vorgesehen, wie exemplarisch in Fig. 10 anhand der oberen Einsetzöffnung 71e gezeigt und im nachfolgenden beschrieben anhand dieser beschrieben.

In die Einsetzöffnung 71e wird ein Schienenverbinder 73e eingesetzt, welcher eine elektrische Verbindungsklemme 74e aus einem elektrisch leitenden Material mit zwei U-förmigen Klemmschenkeln 75e, 75e` umfasst. Die Klemmschenkel 75e, 75e' sind bevorzugt etwas federelastisch ausgebildet und liegen in ihrer Ruhestellung bevorzugt aneinander an. Beim Einstecken des Schienenverbinders 73e in die Einsetzöffnung 71e werden die Klemmschenkel 75e, 75e` auseinander gedrückt und kommen an den umgebogenen Enden der Stromschienen 13e, 113e zu liegen, Bevorzugt sind die Klemmschenkel 75e, 75e' an ihren Enden V-förmig aufeinander zu geformt, so dass zum einen das Einfädeln über die umgebogenen Enden der Stromschienen 13e, 113e vereinfacht wird, und zum anderen ein dauerhafter elektrischer Kontakt mit den Enden der Stromschienen 13e, 113e sichergestellt wird. Die elektrische Energieübertragung erfolgt somit zusätzlich zum Kontakt der Enden der Stromschienen 13e, 113e auch über die Verbindungsklemme 74e, so dass selbst bei einer evtl. dynamischen Lösung des Kontakts zwischen den Stromschienen 13e, 113e, z.B. bei der Durchfahrt des Stromabnehmerwagens 40 respektive des Schleifkontakts 53c, 53e eine dauerhafte elektrische Verbindung sichergestellt ist.

Die Verbindungsklemme 74e ist in einem Aufnahmeraum 77e eines Klemmkopfs 76e gehalten, der einander gegenüberliegende Seitenwandungen 78e, 78e` und zwei 90° dazu versetzt angeordnete, weg von der Verbindungsklemme 74e nach außen weisende Rastnasen 79e, 79e' aufweist. Die Rastnasen 79e, 79e' verrasten beim Einstecken mit den Raststegen 72e, 72e` und halten den Schienenverbinder 73e sicher in der Einsetzöffnung 71e. Um den Schienenverbinder 73e wieder entfernen zu können, sind im Bereich oberhalb der Rastnasen 79e, 79e` Entriegelungsöffnungen 80e, 80e` vorgesehen, durch welche mittels eines Werkzeugs die Rastnasen 79e, 79e' von den Raststegen 72e, 72e' weg bewegt werden können, wodurch die Rastverbindungen gelöst werden kann. Die anderen Schienenverbinder 73a-e mit ihren elektrische Verbindungsklemmen 74a-e und Klemmköpfen 76a-e sind entsprechend ausgestaltet.

Durch die oben beschriebene Ausgestaltung wird die elektrische Verbindung der Stromschienen 13a-e bzw. 113a-e sichergestellt und zusätzlich dafür gesorgt, dass die Teilverbindungselemente 61,61' miteinander zum Verbindungselement 60 verbunden sind. Da die Verbindungskonturen 62, 62' aber nicht fest mit den Enden der Rahmenprofile 3, 103 verbunden sind, sondern verschiebbar auf diese aufgesteckt sind, können unterschiedliche Längenänderungen der metallischen Stromschienen 13a-e, 113a-e und der Rahmenprofile 3, 103 einfach ausgeglichen werden.

Weiter wird aber vorteilhaft noch dafür gesorgt, dass der Stromabnehmerwagen 40 ungehindert durch das Verbindungselement 60 durchfahren kann und auch unterschiedliche Spaltweiten der Spalte S, S' das Durchfahren nicht behindern. Da die Teilverbindungselemente 61, 61' identisch ausgebildet sind, wird dies nachfolgend vor allem anhand von Fig. 1, 7, 8, 11, 12 und 14 und an dem in Fig. 7 rechten Teilverbindungselement 61 erläutert, entsprechende Ausführungen gelten auch für das andere, zweite Teilverbindungselement 61'.

Wie insbesondere in Fig. 1, 7, 8 und 11 erkennbar, stehen in Längsrichtung L von dem Verbindungsprofil 63 rechts und links des Längsschlitzes 85 des Teilverbindungselements 61 zwei Überfahrschienen 81a, 81b hervor. Diese weisen an ihren freien Enden in Höhenrichtung H nach unten abgeschrägte Auffahrrampen 82a, 82b auf. Weiter verlaufen die Überfahrschienen 81a, 81b auf ihrer dem Längsschlitz 85 und somit auch dem Längsschlitz 7 zugewandten Seiten bündig mit den Seitenwandungen der Längsschlitze 85 und 7in Höhenrichtung H nach oben, um die Durchfahrt des Kabelkanals 54 nicht zu behindern.

Auf ihrer den Längsschlitzen 85 und 7 abgewandten Seiten weisen die Überfahrschienen 81a, 81b seitlich auskragende Überfahrgleisflächen 86a, 86b auf, welche sich mit ihrer Unterseite auf den seitlichen Rollenführungsstegen 10a, 10b abstützen. Die den Längsschlitzen 85 und 7 abgewandten Seiten der Überfahrschienen 81a, 81b schließen seitlich mit den Längsschlitzen 85 und 7 abgewandten Seiten der seitlichen Rollenführungsstegen 10a, 10b bündig ab, um die Durchfahrt der Laufrolle 43 bzw. deren Spurkränzen 47a, 47b nicht zu behindern.

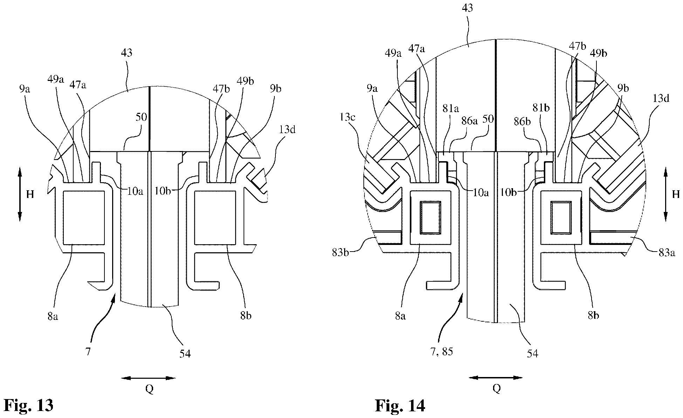

Die Überfahrgleisflächen 86a, 86b sind dabei in Höhenrichtung H so hoch, dass die sich seitlich und nach innen an die Spurkränze 47a, 47b anschließende Hilfslauffläche 50 der Laufrolle 43 darauf rollen kann, wie im Detail B in Fig. 14 gut erkennbar.

Da im Bereich des Spalts S die Gleisflächen 9a, 9b des Rahmenprofils 3 beendet und entsprechenden Verbindungsgleisflächen 87a, 87b des Verbindungselements 60 noch nicht begonnen haben, wie in Fig. 1 und 8 gut erkennbar, und die Überfahrschienen 81a, 81b aber über den Spalt S in den Bereich des Rahmenprofils 3 ragen, rollt fährt die Laufrolle 43 noch im Bereich des Rahmenprofils 3 zum einen auf den Gleisflächen 9a, 9b und mit der Hilfslauffläche 50 auf den Überfahrgleisflächen 86a, 86b. Im Bereich des Spalts S rollt die Laufrolle 43 dann nur noch auf den Überfahrgleisflächen 86a, 86b, bis sie die Verbindungsgleisflächen 87a, 87b erreicht hat und dann auch auf diesen rollt. Im zweiten Spalt S' rollt die Laufrolle 43 dann wieder nur noch auf den Überfahrgleisflächen 86, 86, und anschließend über die Auffahrrampe 82b` und die entsprechende nicht gezeichnete Auffahrrampe auf der anderen Seite des Längsschlitzes 85', 7 wieder auf die Gleisflächen 109a, 109b des zweiten Rahmenprofils 103. Die Verbindungsgleisflächen 87a, 87b sind dabei bevorzugt in Höhenrichtung H bündig zu den Gleisflächen 9a, 9b.

Ggf. können die Überfahrgleisflächen 86, 86' in Höhenrichtung H auch etwas höher sein, so dass die Laufflächen 49a, 49b der Laufrolle 43 beim Auffahren auf die Auffahrrampen 82a, 82b etwas angehoben wird und dann im Bereich kurz vor und während des Spalts S nur noch mit der Hilfslauffläche 50 auf den Überfahrgleisflächen 86a, 86b rollt. Kurz nach dem Ende des Spalts S rollt die Hilfslauffläche 50 dann über die Auffahrrampe 82b` und die nicht gezeichnete entsprechende Auffahrrampe und wird dabei in Höhenrichtung H soweit abgesenkt, dass dann die Laufflächen 49a, 49b der Laufrolle 43 die Gleisflächen 109a, 109b wieder berühren und auf diesen abrollen können. Dabei können die Verbindungsgleisflächen 87a, 87b in Höhenrichtung H bündig zu den Gleisflächen 9a, 9b oder aber auch höher als diese sein, da mit dem Anheben der Laufrolle 43 auch die Laufflächen 49a, 49b angehoben werden. Ggf. kann auch ganz auf die Verbindungsgleisflächen 87a, 87b verzichtet werden, die Laufrolle 43 rollt dann nur noch auf den Überfahrgleisflächen 86a, 86b.

Die eben beschriebene Ausgestaltung mit höheren Überfahrgleisflächen 86a, 86b weist den Vorteil auf, dass die Laufflächen 49a, 49b der Laufrolle 43 beim Ausfahren nicht an die Gleisflächen 109a, 109b anstoßen können, sondern sanft von oben auf diesen abgesetzt werden.

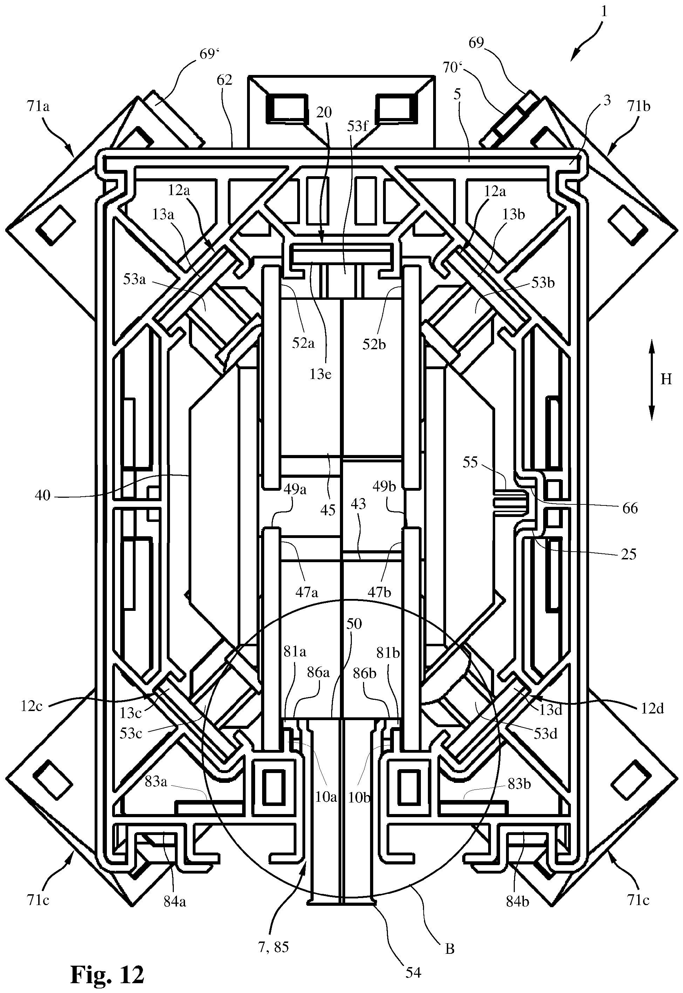

Wie insbesondere in Fig. 7, 8 und 11 gut erkennbar, stehen in Längsrichtung L von dem Verbindungsprofil 63 rechts und links des Längsschlitzes 85 des Teilverbindungselements 61 flache Verbindungsstege 83a, 83b über, welche seitlich an den Rollenlaufprofilen 8a, 8b des Rahmenprofils 3 zu Anlage kommen. Hierdurch kann zusätzlich dazu, dass die Verbindungskontur 62 das Rahmenprofil 3 umgreift, eine weitere Positionierung und passende Ausrichtung des Verbindungselements 60 mit dem Rahmenprofil 3 sichergestellt werden, um, wie in Fig. 12 und 14 gut erkennbar, eine möglichst exakte Ausrichtung der Überfahrschienen 81a, 81b mit den seitlichen Rollenführungsstegen 10a, 10b zu ermöglichen und einen ruhigen Lauf der Laufrollen 42, 43 zu erreichen.

Entsprechend weist die Verbindungskontur 62 auch auf ihrer Unterseite Haltestege 84a, 84b auf, welche in entsprechende Rücksprünge an den öffnungsseitigen Bodenwandungen 6a, 6b eingreifen und somit eine gute Verbindung zwischen Verbindungselement 60 und Rahmenprofil 3 ermöglichen.

### Bezugszeichen

- 1: Schleifleitungssystem
- 2: Schleifleitung bzw. Kastenschleifleitung
- 2a, 2b: Teilabschnitte Schleifleitung
- 3: kastenförmiges Rahmenprofil
- 4a, 4b: Seitenwandungen
- 5: Oberwandung
- 6a, 6b: öffnungsseitige Bodenwandungen
- 7: Längsschlitz
- 8a, 8b: Rollenlaufprofile
- 9a, 9b: Gleisflächen
- 10a, 10b: seitliche Rollenführungsstege
- 11a-d: Schrägwandungen
- 12a-d: schräge Stromschienenhalterungen
- 13a-e: Stromschienen
- 14a-e: Schleiffläche Stromschienen
- 15a-d, 15a'-d': Schienenhaltestege
- 16a-d, 16a`-d`: Schienenstegrücksprünge
- 17a-d: Stabilisierungsstege
- 18a, 18b: seitliche Stabilisierungswandungen
- 19a, 19b: Seitenstabilisierungsstege
- 20: obere Stromschienenhalterung
- 21a, 21b: schräge Innenstege
- 22: wabenförmiger Innenraum
- 23, 23': Schienenhaltestege
- 24, 24`: Schienenstegrücksprünge
- 25: seitliche Führungsnut
- 40: Stromabnehmerwagen
- 41: Rahmen
- 42, 43: Laufrollen (unten) (Doppelspurkranzrollen)
- 44, 45: Führungsrollen (oben) (Doppelspurkranzrollen)
- 46a, 46b, 47a, 47b: Spurkränze Laufrollen
- 48a, 48b, 49a, 49b: Laufflächen Laufrollen
- 50: Hilfslauffläche Laufrolle
- 51a, 52a, 52a, 52b: Spurkränze Führungsrollen
- 53c, e: Schleifkontakte (Erdungsschleifkontakte)
- 53a, b, d: Schleifkontakte (Phasenschleifkontakte)
- 53f: Schleifkontakt (Nullpotentialschleifkontakt)
- 54: trichterförmiger Kabelkanal
- 55: seitlicher Führungssteg
- 60: Verbindungselement
- 61, 61': erstes bzw. zweites Teilverbindungselement
- 62,62': Verbindungskontur
- 63, 63': Verbindungsprofile
- 64a-d: schräge Verbindungsstromschienenhalterungen
- 65, 65': weitere Verbindungsstromschienenhalterung
- 66, 66': seitliche Verbindungsführungsnuten
- 67, 67': seitliche Verbindungslasche
- 68, 68': seitliche Verbindungsöffnungen
- 69, 69': obere U-förmige Rastlaschen
- 70, 70': obere Rastnasen
- 71a-e: Einsetzöffnung für Schienenverbinder
- 72e, 72e': Raststege für Rastnasen Klemmkopf
- 73a-e: Schienenverbinder
- 74a-e: elektrische Verbindungsklemmen
- 75e, 75e': U-förmige Klemmschenkel
- 76a-e: Klemmkopf
- 77e: Aufnahmeraum
- 78e, 78e': Seitenwandungen
- 79d, 79e, 79e', 79e`: Rastnasen Klemmkopf
- 80a, 80e, 80e', 80e': Entriegelungsöffnungen Klemmkopf
- 81a, 81b, 81b': Überfahrschienen
- 82a, 82b, 82b': Auffahrrampen
- 83a, 83b, 83b': Verbindungsstege
- 84a, 84b: Haltestege
- 85, 85': Längsschlitze
- 86a, 86b, 86a', 86b': Überfahrgleisflächen
- 87a, 87b: Verbindungsgleisflächen
- 103: kastenförmiges Rahmenprofil des zweiten Teilstücks
- 104a, 4b: Seitenwandungen
- 105: Oberwandung
- 106a, 106b: öffnungsseitige Bodenwandungen
- 107: Längsschlitz
- 109a, 109b: Gleisflächen
- 110a, 110b: seitliche Rollenführungsstege
- 113a-e: Stromschienen
- 114a-e: Schleiffläche Stromschienen
- 118a, 108b: seitliche Stabilisierungswandungen
- 124, 124': Schienenstegrücksprünge
- 125: seitliche Führungsnut

- I: Innenraum Kastenschleifleitung
- V: Innenraum Verbindungselement
- L: Längsrichtung Kastenschleifleitung, Verbindungselement
- Q: Querrichtung Kastenschleifleitung, Verbindungselement
- H: Höhenrichtung Kastenschleifleitung, Verbindungselement
- S, S': Spalte zwischen Verbindungsprofilen und Rahmenprofilen

## Patentansprüche

1. Verbindungselement (60) zur elektrischen und mechanischen Verbindung von in eine Längsrichtung (L) einer Schleifleitung (2) benachbarten Teilabschnitten (2a, 2b) der Schleifleitung (2), wobei die Teilabschnitte (2a, 2b) der Schleifleitung (2) sich in Längsrichtung (L) erstreckende, einen Innenraum (I) umgebende Rahmenprofile (3, 103) mit einer Innenkontur aufweist, wobei der Innenraum (I) über in Längsrichtung (L) verlaufende Längsschlitze (5, 105) in den Rahmenprofilen (3) von außen zugänglich ist, in dem Innenraum (I) sind mehrere Stromschienen (13a-e, 113a-e) zur schleifenden Kontaktierung mit jeweils einem entsprechenden Schleifkontakt (53a-f) eines längs der Schleifleitung (2) verfahrbaren Stromabnehmerwagens (40) vorgesehen, wobei der Stromabnehmerwagen (40) zum Verfahren in Längsrichtung (L) entlang der Schleifleitung (2) drehbar gelagerte Laufrollen (42, 43) aufweist, die mit ihren Laufflächen (48a, 48b, 49a, 49b) auf entsprechenden Gleisflächen (9a, 9b, 109a, 109b) der Rahmenprofile (3, 103) der Schleifleitung (2) rollen, **dadurch gekennzeichnet, dass** das Verbindungselement (60) ein an die Innenkontur der Rahmenprofile (3, 103) angepasstes Verbindungsprofil (63, 63') aufweist, an welches sich in Längsrichtung (L) beidseits zu den Teilabschnitten (2a, 2b) hin weisende, zum Umgreifen der Rahmenprofile (3, 103) an die Außenkonturen der Rahmenprofile (3, 103) angepasste Verbindungskonturen (62, 62') erstrecken.

2. Verbindungselement (60) nach Anspruch 1, **dadurch gekennzeichnet, dass** das Verbindungsprofil (63, 63') in Längsrichtung (L) beidseits über seine Stirnseiten in den Bereich der Verbindungkontur (62, 62') hineinragende Überfahrschienen (81a, 81b, 81b') mit Überfahrgleisflächen (86a, 86b, 86a', 86b') für Hilfslauflächen (50) der Laufrollen (42, 43) des Stromabnehmerwagens (40) aufweist.

3. Verbindungselement (60) nach Anspruch 2, **dadurch gekennzeichnet, dass**, in eine Höhenrichtung (H) gemessen, ein Abstand der Überfahrgleisflächen (86a, 86b, 86a', 86b') von Verbindungsgleisflächen (87a, 87b) des Verbindungsprofils (63, 63'), auf denen Laufflächen (48a, 48b, 49a, 49b) der Laufrollen (42, 43) des Stromabnehmerwagens (40) rollen, einem Abstand der Hilfslaufflächen (50) von den Laufflächen (48a, 48b, 49a, 49b) der Laufrollen (42, 43) entspricht.

4. Verbindungselement (60) nach Anspruch 2 oder 3, **dadurch gekennzeichnet,**
- **dass** die Überfahrschienen (81a, 81b, 81b') zur Anlage an das jeweils benachbarte Rahmenprofil (3, 103) ausgebildet sind, insbesondere zur teilweisen Auflage auf seitliche Rollenführungssteg (10a, 10b) der Rahmenprofile (3, 103), und/oder
- **dass** die Überfahrschienen (81a, 81b, 81b') an ihren freien Enden in Höhenrichtung (H) zu den freien Enden hin abfallende Auffahrrampen (82a, 82b, 82b') für die Hilfslaufflächen (50) der Laufrollen (42, 43) aufweisen, und/oder
- **dass** die Überfahrschienen (81a, 81b, 81b') in eine quer zur Längsrichtung (L) und/oder Höhenrichtung (H) senkrecht stehenden Querrichtung (Q) maximal bis zu den Seitenwandungen eines in Längsrichtung (L) verlaufenden Längsschlitzes (85, 85') des Verbindungselements (60) reichen, bevorzugt mit den Seitenwandungen des Längsschlitzes (85, 85') bündig sind.

5. Verbindungselement (60) nach einem der Ansprüche 2 bis 4, **dadurch gekennzeichnet,**
- **dass** der Abstand von Außenseiten der auf beiden Seiten des Längsschlitzes (85, 85') angeordneten Überfahrschienen (81a, 81b, 81b') in Querrichtung (Q) kleiner ist als ein innenseitiger Abstand von Spurkränzen (51a, 52a, 52a, 52b) der Laufrollen (42, 43), und/oder
- **dass** der Abstand zwischen Verbindungsgleisflächen (87a, 87b) von Außenseiten der auf beiden Seiten des Längsschlitzes (85, 85') angeordneten Überfahrschienen (81a, 81b, 81b') in Querrichtung (Q) kleiner ist als ein innenseitiger Abstand von Spurkränzen (51a, 52a, 52a, 52b) der Laufrollen (42, 43).

6. Verbindungselement (60) nach einem der voranstehenden Ansprüche, **dadurch gekennzeichnet,**
- **dass** das Verbindungsprofil (63, 63') in Längsrichtung (L) beidseits über seine Stirnseiten in den Bereich der Verbindungskontur (62, 62') hineinragende Verbindungsstege (83a, 83b, 83b') aufweist, insbesondere wobei die Verbindungsstege (83a, 83b, 83b') zur Anlage an das jeweils benachbarte Rahmenprofil (3, 103) ausgebildet sind, insbesondere zur Auflage auf öffnungsseitige Bodenwandungen (6a, 6b, 106a, 106b) der Rahmenprofile (3, 103) und/oder zur seitlichen Anlage an Rollenlaufprofile (8a, 8b) der Rahmenprofile (3, 103), und/oder
- **dass** die Verbindungskonturen (62, 62') in Längsrichtung (L) verlaufende Haltestege (84a, 84b) aufweisen, welche zum Eingriff in entsprechende Rücksprünge an öffnungsseitigen Bodenwandungen (6a, 6b, 106a, 106b) der Rahmenprofile (3, 103) ausgebildet sind, und/oder
- **dass** die Verbindungskonturen (62, 62') in Längsrichtung (L) verlaufende Verbindungsstege aufweisen, welche zum Eingriff in entsprechende Rücksprünge an öffnungsseitigen Bodenwandungen (6a, 6b, 106a, 106b) der Rahmenprofile (3, 103) ausgebildet sind.

7. Verbindungselement (60) nach einem der voranstehenden Ansprüche, **dadurch gekennzeichnet, dass** das Verbindungsprofil in ein erstes und ein zweites Verbindungsprofil (63, 63') aufgeteilt ist, wobei am ersten Verbindungsprofil (63) eine seitliche Verbindungsöffnung (68) vorgesehen ist, in die eine am zweiten Verbindungsprofil (63') angeordnete und in Längsrichtung (L) über dieses zum ersten Verbindungsprofil (63) hin ragende seitliche Verbindungslasche (67') zum Befestigen der beiden Verbindungsprofile (63, 63') aneinander eingreift.

8. Verbindungselement (60) nach Anspruch 7, **dadurch gekennzeichnet,**
- **dass** am zweiten Verbindungsprofil (63') eine seitliche Verbindungsöffnung (68') vorgesehen ist, in die eine am ersten Verbindungsprofil (63) angeordnete und in Längsrichtung (L) über dieses zum zweiten Verbindungsprofil (63') hin ragende seitliche Verbindungslasche (67) zum weiteren Befestigen der beiden Verbindungsprofile (63, 63') aneinander vorgesehen ist, und/oder
- **dass** am ersten Verbindungsprofil (63) eine Rastlasche (69) vorgesehen ist, die mit einer am zweiten Verbindungsprofil (63') angeordneten Rastnase (70') zusammenwirkt, wobei beim Zusammensetzen der Verbindungsprofile (63, 63') in Längsrichtung (L) die Rastlasche (69) über die Rastnase (70') geschoben wird und mit dieser verrastet, und wobei bevorzugt am zweiten Verbindungsprofil (63') eine weitere Rastlasche (69') vorgesehen ist, die mit einer am ersten Verbindungsprofil (63) angeordneten weiteren Rastnase (70) zusammenwirkt, wobei beim Zusammensetzen der Verbindungsprofile (63, 63') in Längsrichtung (L) die weitere Rastlasche (69') über die weitere Rastnase (70) geschoben wird und mit dieser verrastet.

9. Verbindungselement (60) nach einem der Ansprüche 7 bis 8, **dadurch gekennzeichnet, dass** am ersten und zweiten Verbindungsprofil (63, 63') jeweils ein Teil von Einsetzöffnungen (71a-e) für Schienenverbinder (73a-e) vorgesehen sind, in welche die Schienenverbinder (73a-e) im zusammengebauten Zustand des ersten und zweiten Verbindungsprofils (63, 63') aufnehmbar ist.

10. Verbindungselement (60) nach Anspruch 9, **dadurch gekennzeichnet, dass** die Schienenverbinder (73a-e) jeweils eine elektrische Verbindungsklemme (74a-e) mit U-förmigen Klemmschenkeln (75, 75') aufweisen, wobei die U-förmigen Klemmschenkel (75, 75') zum beidseitige Anliegen an nach außen umgebogene Enden von durch die Verbindungsprofile (63, 63') in Längsrichtung (L) verlaufenden Stromschienen (13a-e, 113a-e, 113a-e) der zu verbindenden Teilabschnitte (2a, 2b) der Schleifleitung (2) vorgesehen sind.

11. Verbindungselement (60) nach Anspruch 10, **dadurch gekennzeichnet, dass** die Verbindungsklemmen (74a-e) jeweils in einem Aufnahmeraum (77a-e) eines jeweiligen Klemmkopfs (76a-e) gehalten sind.

12. Verbindungselement (60) nach einem der Ansprüche 9 bis 11, **dadurch gekennzeichnet, dass** die Einsetzöffnungen (71a-e) und die Schienenverbinder (73a-e) Raststege (72e, 72e') bzw. Rastnasen (79d, 79e, 79d, 79e) zum Verrasten der Schienenverbinder (73a-e) in der jeweiligen Einsetzöffnung (71a-e) aufweisen.

13. Verbindungselement (60) nach Anspruch 11 und 12, **dadurch gekennzeichnet, dass** die Raststege (79d, 79c) und/oder Rastnasen (79d, 79c) am jeweiligen Klemmkopf (76a-e) angeordnet sind, insbesondere wobei die Klemmköpfe (76a-e) Entriegelungsöffnungen (80, 80') für ein Werkzeug zum Öffnen der durch die Rastnasen (72, 72') und Raststege (79d, 79c) gebildeten Rastverbindungen aufweisen.

14. Verbindungselement (60) nach einem der voranstehenden Ansprüche, **dadurch gekennzeichnet, dass** das oder die Verbindungsprofile (3, 103) kastenförmig ausgebildet ist.

15. Verbindungselement (60) nach Anspruch 14, **dadurch gekennzeichnet, dass** das kastenförmige Verbindungsprofil (3, 103) einander gegenüberliegende Verbindungsseitenwandungen aufweist, welche durch eine Verbindungsoberwandung miteinander verbunden sind, wobei
- die Verbindungsseitenwandungen auf ihrer der Verbindungsoberwandung gegenüberliegenden Seite Verbindungsbodenwandungen aufweisen, zwischen denen der Längsschlitz (85, 85') verläuft, und/oder
- die Verbindungseitenwandungen mit der Verbindungsoberwandung und/oder den Verbindungsbodenwandungen mittels hierzu in einem Winkel verlaufender Verbindungsschrägwandungen verbunden sind, insbesondere wobei der Winkel bevorzugt 35° bis 55°, besonders bevorzugt 40° bis 50° und ganz besonders bevorzugt 44° bis 46° beträgt, und/oder
- die Verbindungsschrägwandungen schräge Verbindungsstromschienenhalterungen und/oder die Verbindungsoberwandung weitere Verbindungsstromschienenhalterungen zur Halterung von Stromschienen (13a-e, 113a-e, 113a-e) der Teilabschnitte (2a, 2b) der Schleifleitung (2) aufweisen, wobei die Verbindungsstromschienenhalterungen bevorzugt auf entsprechende Stromschienenhalterungen der Rahmenprofile (3, 103) ausgerichtet sind.

16. Verbindungselement (60) nach einem der voranstehenden Ansprüche, **dadurch gekennzeichnet, dass** das oder die Verbindungsprofile (63, 63') mindestens eine, bevorzugt seitliche Verbindungsführungsnut (66, 66') für einen oder mehrere, bevorzugt seitliche entsprechende Führungsstege (55) des Stromabnehmerwagens (40) aufweisen, wobei die Verbindungsführungsnuten (66, 66') bevorzugt in Längsrichtung (L) auf Führungsnuten (25, 125) der Rahmenprofile (3, 103) der sich anschließenden Schleifleitung (2) ausgerichtet sind.

17. Schleifleitung (2) mit in ihrer Längsrichtung (L) benachbarten Teilabschnitten (2a, 2b), wobei die Teilabschnitte (2a, 2b) sich in Längsrichtung (L) erstreckende, einen Innenraum (I) umgebende Rahmenprofile (3, 103) mit einer Innenkontur aufweisen, wobei der Innenraum (I) über in Längsrichtung (L) verlaufende Längsschlitze (7) in den Rahmenprofilen (3, 103) von außen zugänglich ist, in dem Innenraum (I) sind mehrere Stromschienen (13a-e, 113a-e) zur schleifenden Kontaktierung mit jeweils einem entsprechenden Schleifkontakt (53a-f) eines längs der Schleifleitung (2) verfahrbaren Stromabnehmerwagens (40) vorgesehen, wobei der Stromabnehmerwagen (40) zum Verfahren in Längsrichtung (L) entlang der Schleifleitung (2) drehbar gelagerte Laufrollen (42, 43) aufweist, die mit ihren Laufflächen (48a, 48b, 49a, 49b) auf entsprechenden Gleisflächen (9a, 9b) der Rahmenprofile (3, 103) der Schleifleitung (2) rollen, **dadurch gekennzeichnet, dass** zum Verbinden der Teilabschnitte (2a, 2b) der Schleifleitung (2) ein Verbindungselement (60) nach einem der voranstehenden Ansprüche vorgesehen ist.

18. Schleifleitung (2) nach Anspruch 17, **dadurch gekennzeichnet, dass** die Rahmenprofile (3, 103) kastenförmig ausgebildet sind, insbesondere wobei die Stromschienen (13a-d) in den Ecken des kastenförmigen Rahmenprofils (3) angeordnet sind.

19. Schleifleitung (2) nach einem der Ansprüche 17 bis 18, **dadurch gekennzeichnet,**
- **dass** die Stromschienen (13a-e, 113a-e) über die Enden der Teilabschnitte (2a, 2b) in Verbindungsstromschienenhalterungen (64a-d, 64a'-d', 65, 65') des oder der Verbindungsprofile (61, 61') reichen, und/oder
- **dass** die Enden der Stromschienen (13a-e, 113a-e, 113a-e) nach außen gebogen sind, insbesondere in einem Winkel von bevorzugt 85° bis 95°, besonderes bevorzugt in einem Winkel von 88° bis 92°, und ganz besonders bevorzugt in einem Winkel von 90°, insbesondere wobei die umgebogenen Enden der Stromschienen (13a-e, 113a-e, 113a-e) in Einsetzöffnungen (71a-e) des Verbindungselements (60) ragen und jeweils von elektrischen Verbindungsklemmen (74a-e) in Längsrichtung (L) umgriffen werden, und/oder
- **dass** die Verbindungsprofile (63, 63') zu den benachbarten Rahmenprofilen (3, 103) in Längsrichtung (L) jeweils in einem Abstand zum Ermöglichen eines jeweiligen längsveränderlichen Spalts (S, S') angeordnet sind, welcher von der jeweiligen Verbindungskontur (62, 62') und/oder von den Überfahrschienen (81a, 81b, 81b`) überbrückt wird.

20. Stromabnehmerwagen (40) zum Verfahren längs einer, insbesondere nach einem der Ansprüche 17 bis 19 ausgebildeten Schleifleitung (2) in eine Längsrichtung (L) der Schleifleitung (2), mit mindestens einem Schleifkontakt (53a-e) zur schleifenden Kontaktierung mit jeweils einer entsprechenden Stromschiene (13a-e, 113a-e) der Schleifleitung (2), wobei die Schleifleitung (2) mindestens zwei längliche Rahmenprofile (3, 103) aufweist, die an ihren Enden mittels eines, insbesondere nach einem der Ansprüche 1 bis 16 ausgebildeten Verbindungselement (60), elektrisch und mechanisch verbindbar oder verbunden sind, **dadurch gekennzeichnet, dass** der Stromabnehmerwagen (40) zum Verfahren in Längsrichtung (L) entlang der Schleifleitung (2) drehbar gelagerte Laufrollen (42, 43) aufweist, die mit ihren Laufflächen (48a, 48b, 49a, 49b) auf entsprechenden Gleisflächen (9a, 9b) der Rahmenprofile (3, 103) der Schleifleitung (2) rollen.

21. Stromabnehmerwagen (40) nach Anspruch 20, **dadurch gekennzeichnet,**
- **dass** die Laufrollen (48a, 48b, 49a, 49b) mindestens eine Hilfslauffläche (50) mit kleinerem Durchmesser als die Laufflächen (48a, 48b, 49a, 49b) zum Rollen auf einer Überfahrgleisfläche (86a, 86b) von Überfahrschienen (81a, 81b, 81b') des Verbindungselements (60) aufweisen, und/oder
- **dass** die Laufrollen (42, 43) Spurkränze (46a, 46b, 47a, 47b) zum seitlichen Führen der Laufrollen (42, 43) an seitlichen Rollenführungsstegen (10a, 10b) der Rahmenprofile (3, 103) und/oder Überfahrschienen (81a, 81b, 81b') des Verbindungselements (60) aufweisen, wobei die Laufflächen (48a, 48b, 49a, 49b) bevorzugt an den Stirnseiten der Spurkränze (46a, 46b, 47a, 47b) angeordnet sind, und/oder
- **dass** die Hilfslauffläche (50) zwischen den Spurkränzen (46a, 46b, 47a, 47b) der Laufrollen (42, 43) angeordnet ist, und/oder
- **dass** die Laufflächen (48a, 48b, 49a, 49b) der Laufrollen (42, 43) zum Rollen auf Verbindungsgleisflächen (87a, 87b) des Verbindungselements (60) ausgebildet sind, und/oder
- **dass** jeder der Schleifkontakte (53a-e) mittels eines Zustellmechanismus in Richtung der zugeordneten Stromschienen (13a-f) bewegbar ist, insbesondere wobei der Zustellmechanismus die Schleifkontakte (53a-e) dauerhaft und/oder federelastisch an die Stromschienen (13a-f) drückt, und/oder
- **dass** der Stromabnehmerwagen (40) mittels drehbar gelagerter Führungsrollen (44, 45) an Führungen (23, 23') der Schleifleitung (2) führbar ist, und/oder
- **dass** der Stromabnehmerwagen (40) in einem Innenraum (I) der Schleifleitung (2) in Längsrichtung (L) verfahrbar angeordnet ist.

22. Schleifleitungssystem (1) mit einer in eine Längsrichtung (L) verlaufenden Schleifleitung (2) und einem darin in die Längsrichtung (L) verfahrbaren Stromabnehmerwagen (40) mit mindestens einem Schleifkontakt (53a-d), **dadurch gekennzeichnet, dass** die Schleifleitung (2) nach einem der Ansprüche 17 bis 19 und der Stromabnehmerwagen (40) nach einem der Ansprüche 20 bis 21 ausgebildet sind.
